# DEMANDE DE BREVET EUROPEEN

(11) **EP 1 995 682 A1**
(43) Date de publication de la demande: **26.11.2008**
(21) Numéro de dépôt: 08156216.7
(22) Date de dépôt: 15.05.2008
(51) Int. Cl.: G06F 21/02, G06F 21/22, G06F 21/24

(54) **Personnalisation d'un microprocesseur et procédé de protection de données**

(30) Priorité: 21.05.2007 FR 0755158
(71) Demandeur: STMICROELECTRONICS SA, 92120 Montrouge (FR)
(72) Inventeur: Bancel, Frédéric, 13113 Lamanou (FR); Berard, Nicolas, 13530 Trets (FR); Roquelaure, Philippe, 13320 Bouc Bel Air (FR)
(74) Mandataire: de Beaumont, Michel

(57) **Abrégé**

L'invention concerne un circuit électronique contenant une unité de traitement (11) d'exécution d'instructions de programme, comporte au moins un module (20) de reconnaissance d'au moins un premier opérateur d'instruction dans le programme et de conversion de ce premier opérateur en un autre opérateur d'instruction, les deux opérateurs étant interprétables par l'unité de traitement. L'invention concerne également un procédé de contrôle d'accès à des données par un tel circuit.

## Description

### Domaine de l'invention

La présente invention concerne de façon générale les unités de traitement de données numériques et, plus particulièrement, les circuits électroniques intégrant une unité centrale de traitement qui interprète des instructions de programmes contenus dans une ou plusieurs mémoires internes ou externes à cette unité de traitement.

La présente invention s'applique plus particulièrement aux circuits intégrés dont au moins un élément de mémorisation stocke des données à accès contrôlé.

### Exposé de l'art antérieur

Dans une unité de traitement, les programmes sont généralement stockés dans une mémoire non volatile. Lorsqu'un programme manipule des données à accès contrôlé (par exemple des clés de chiffrement contenues dans le circuit intégré) ou exécute des fonctions particulières (par exemple un algorithme de chiffrement ou de marquage (WaterMarking)), les instructions du programme sont capables d'accéder à des données à accès contrôlé ou de les manipuler. C'est pourquoi on cherche à éviter qu'un utilisateur mal intentionné puisse prendre connaissance du programme. En effet, l'obtention du programme ou code logiciel par un utilisateur mal intentionné peut lui permettre de faire rejouer ce programme sur une autre unité de traitement dans laquelle il est capable de surveiller les données véhiculées par les différents bus, de façon à être alors en mesure de percer les secrets du circuit.

Ce problème est d'autant plus sensible que les programmes ont besoin d'être mis à jour et que de telles mises à jour sont opérées par des téléchargements généralement par le biais de réseaux non nécessairement sécurisés.

Il serait souhaitable de disposer d'un mécanisme de protection qui interdise à un programme dédié à un circuit ou à un type de circuit de remplir sa fonction d'accès à des données à accès contrôlé lorsqu'il est exécuté sur un autre circuit. Par données à accès contrôlé, on entend des données (instructions, variables, etc.) dont on souhaite réserver l'accès ou la manipulation à un circuit ou à un type ou groupe de circuits. Il s'agit, par exemple, de clés de sécurisation de données, de sous-programmes permettant d'accéder à de telles clés, etc.

### Résumé de l'invention

La présente invention vise à pallier tout ou partie des inconvénients liés à l'exécution d'un programme par une unité de traitement susceptible de donner accès à des informations à accès contrôlé.

Un objet vise plus particulièrement à rendre inefficace une éventuelle interprétation de programmes manipulant des données à accès contrôlé.

Un autre objet est d'empêcher un programme destiné à un circuit de remplir sa fonction s'il est exécuté sur un autre circuit.

Un autre objet est de rendre le mécanisme de protection transparent pour l'utilisateur.

Pour atteindre tout ou partie de ces objets ainsi que d'autres, il est prévu un circuit électronique contenant une unité de traitement d'exécution d'instructions de programme, comportant au moins un module de reconnaissance d'au moins un premier opérateur d'instruction dans le programme et de conversion de ce premier opérateur en un autre opérateur d'instruction, les deux opérateurs étant interprétables par l'unité de traitement.

Selon un mode de réalisation, le module est un plan mémoire contenant, en guise d'adresse, le premier opérateur et en donnée correspondante, l'autre opérateur.

Selon un mode de réalisation, le module est activable en fonction d'une mémoire d'où proviennent les instructions à traiter.

Il est également prévu un procédé de contrôle d'accès à des données dans un circuit électronique contenant une unité de traitement d'exécution de programme, dans lequel :
des premiers opérateurs d'instruction contenus dans un programme à exécuter sont, lors de leur chargement pour exécution, comparés par rapport à au moins un deuxième opérateur ; et
en cas d'identité, le premier opérateur est remplacé par le deuxième donnant accès auxdites données.

Selon un mode de mise en oeuvre, chaque premier opérateur et son deuxième opérateur associé conduisent à un temps d'exécution identique.

### Brève description des dessins

Ces objets, caractéristiques et avantages, ainsi que d'autres seront exposés en détail dans la description suivante de modes de mise en oeuvre et de réalisation particuliers faite à titre non-limitatif en relation avec les figures jointes parmi lesquelles :
la figure 1 représente une carte à puce du type auquel s'applique à titre d'exemple la présente invention ;
la figure 2 représente, de façon très schématique, un récepteur de signaux radiodiffusés du type auquel s'applique à titre d'exemple la présente invention ;
la figure 3 est un schéma bloc d'un exemple d'architecture d'un circuit électronique comportant une unité de traitement numérique selon un mode de réalisation ;
la figure 4 est un schéma bloc fonctionnel illustrant partiellement un mode de mise en oeuvre d'un module de redirection du circuit de la figure 3 ;
les figures 5A et 5B illustrent le fonctionnement du mode de mise en oeuvre de la figure 4 ; et
la figure 6 est un schéma bloc partiel d'un autre mode de réalisation d'une unité de traitement.

De mêmes éléments ont été désignés par de mêmes références aux différentes figures.

### Description détaillée

Pour des raisons de clarté, seules les étapes et éléments qui sont utiles à la compréhension de l'invention ont été représentés et seront décrits. En particulier, l'interprétation des instructions d'un programme par l'unité de traitement n'a pas été détaillée, l'invention étant compatible avec les interprétations et exploitations habituelles des instructions d'un programme. De plus, les mécanismes de stockage d'instructions d'un programme dans une mémoire n'ont pas non plus été détaillés, l'invention étant là encore compatible avec les techniques habituelles.

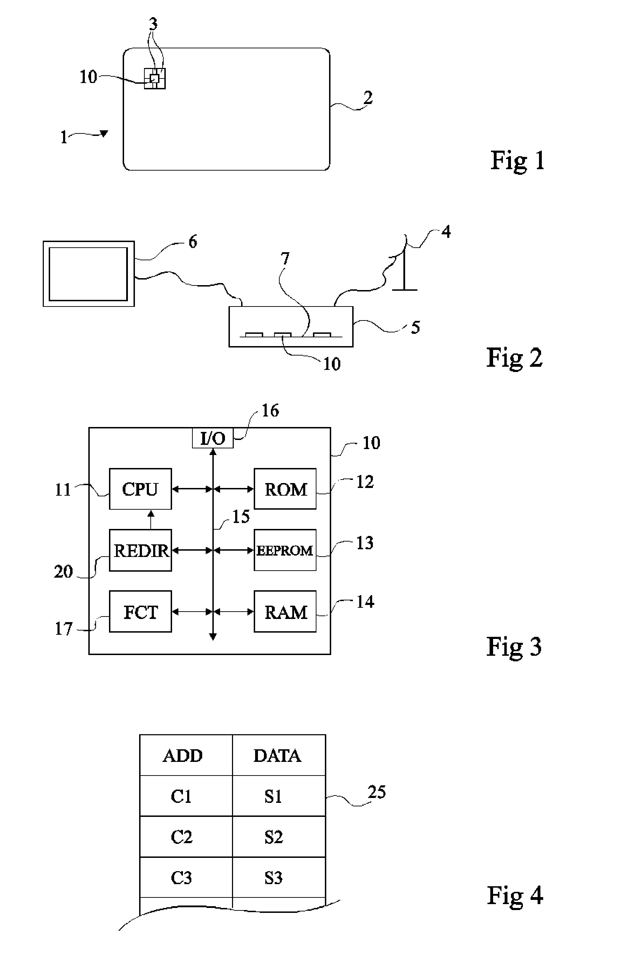

La figure 1 représente, de façon très schématique, une carte à puce 1 du type auquel s'applique à titre d'exemple la présente invention. Une telle carte est par exemple constituée d'un support 2 en matière plastique dans ou sur lequel est rapportée une puce 10 de circuit électronique susceptible de communiquer avec l'extérieur au moyen de contacts 3 ou au moyen d'éléments (non représentés) d'émission/réception sans contact. Le circuit 10 de la carte contient une unité de traitement ainsi que des données à accès contrôlé.

La figure 2 représente un autre exemple d'application de la présente invention à des systèmes de télédiffusion à accès contrôlé. Dans cet exemple, une antenne 4 reçoit des signaux provenant d'un satellite (non représenté) qu'elle transmet à un décodeur 5 pour affichage sur un téléviseur 6. Le décodeur 5 comporte une ou plusieurs cartes électroniques 7 pourvues d'un ou plusieurs circuits 10 de traitement de données numériques reçues. Ce traitement consiste en un décodage au moyen d'une ou plusieurs quantités secrètes (clés cryptographiques) que possède le décodeur 5. Ces clés sont contenues dans des mémoires associées au circuit électronique 10 ou sur un élément externe, par exemple une carte à puce introduite dans le décodeur 5. Dans cet exemple, on considère que le circuit 10 est capable d'exécuter un programme permettant d'accéder à ces données à accès contrôlé.

La figure 3 est un schéma-bloc d'un mode de réalisation d'un circuit électronique 10. Ce circuit comporte une unité centrale de traitement 11 (CPU) capable d'exécuter des programmes contenus dans une ou plusieurs mémoires. Dans cet exemple, le circuit 10 comporte une mémoire non volatile et non reprogrammable 12 (ROM), une mémoire non volatile reprogrammable 13 (EEPROM) et une mémoire vive 14 (RAM). Un ou plusieurs bus 15 de données, de commandes et d'adresses servent de support de communication entre les différents constituants du circuit 10 et avec une interface 16 (I/O) d'entrée-sortie pour communication avec ou sans contact avec l'extérieur. Le plus souvent, le circuit 10 comporte d'autres fonctions (bloc 17, FCT) dépendant de l'application. Il s'agit par exemple de cellules de calcul cryptographiques dédiées pour mettre en oeuvre des algorithmes de chiffrement.

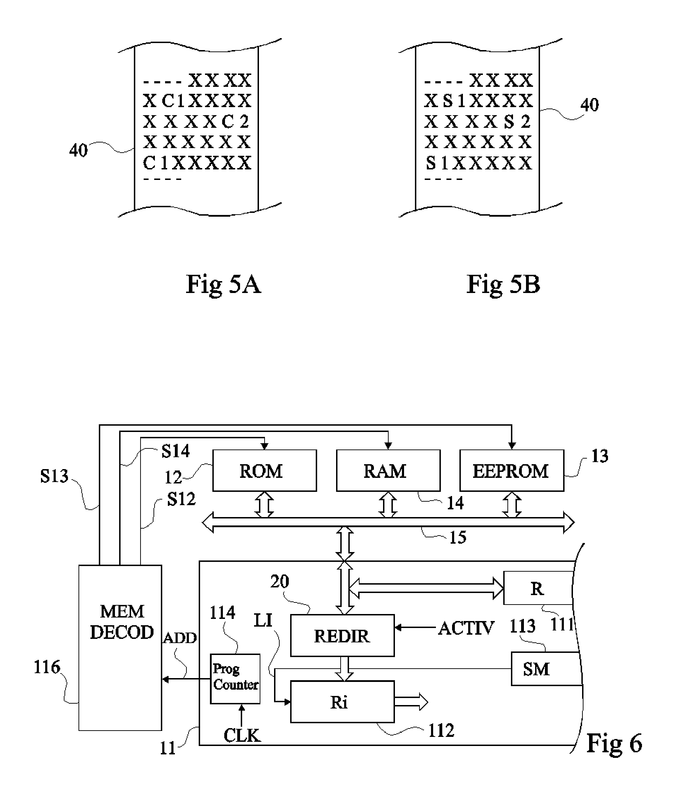

Selon ce mode de réalisation, le circuit 10 comporte un module 20 de redirection de certaines instructions vers d'autres instructions prédéfinies. L'objet de ce module est de transformer des opérateurs d'instructions déterminés dans les programmes en d'autres opérateurs également interprétables par l'unité de traitement et susceptibles d'accéder aux données à accès contrôlé. Le module 20 fournit, par exemple, les instructions directement à l'unité de traitement 11 par une liaison spécifique ou réutilise les bus 15. Selon un autre mode de réalisation qui sera décrit ultérieurement en relation avec la figure 6, ce module 20 est intercalé entre le bus d'instructions de l'unité de traitement et les bus accédant aux mémoires externes à cette unité.

La redirection d'instructions d'un programme n'est effectuée que si le circuit dans lequel il est exécuté possède un module 20 correctement configuré. Par conséquent, un même programme exécuté par un circuit auquel il n'est pas destiné n'accèdera pas aux données à protéger.

Le module de conversion 20 peut être activable par un code, par une instruction spécifique, par un décodage d'adresse, par écriture dans un bit de registre d'activation, etc. Selon un autre mode de mise en oeuvre, ce module est activé en permanence.

La figure 4 est un schéma bloc fonctionnel illustrant un mode de mise en oeuvre, dans un circuit autorisé, par exemple une plateforme sécurisée à laquelle est dédié un programme. Selon ce mode de mise en oeuvre, le module 20 comporte un plan mémoire 25 dont chaque adresse correspond au code d'une instruction spécifique C1, C2, C3, etc. La donnée contenue à cette adresse est un autre opérateur, respectivement S1, S2, S3, etc. correspondant à un opérateur sécurisé. A chaque opérateur d'instruction, le module 20 s'il est activé, adresse son plan mémoire 25 avec le code de l'opérateur. Si l'adresse fournit une donnée, le module 20 remplace l'opérateur par celui présent en tant que donnée à cette adresse du plan mémoire 25. Dans le cas contraire, le code n'est pas redirigé. Les instructions C1, C2, etc. peuvent être considérées comme des instructions en clair, c'est-à-dire exécutables par tout circuit alors que les instructions S1, S2, etc. peuvent être considérées comme des instructions sécurisées dans la mesure où elles ne sont interprétées que si le code logiciel est exécuté par une unité de traitement associée à un module 20 de redirection.

Selon un autre exemple, la redirection des instructions est effectuée par un décodage logique.

A la différence d'un déchiffrement d'un code logiciel chiffré, aucune clé de déchiffrement n'est utilisée dans ce processus, il s'agit d'une simple transformation d'une instruction exécutable en une autre lorsque le programme est exécuté sur la plateforme autorisée.

Les figures 5A et 5B illustrent cette fonctionnalité en représentant deux exemples d'un programme 40 exécuté par une unité de traitement dépourvue de module 20 (figure 5A) et par une unité de traitement autorisée, c'est-à-dire pourvue d'un module 20 de redirection des instructions.

Dans l'exemple des figures 5A et 5B, deux instructions C1 et C2 sont utilisées, par exemple, au début de sous-programmes manipulant des données à accès contrôlé. Le nombre et la fréquence d'apparition des instructions redirigées dépendent de l'application.

Les instructions en clair C1 et C2 ainsi que les instructions sécurisées S1 et S2 sont toutes interprétables par l'unité de traitement de sorte qu'en cas d'inactivation du module 20 ou d'exécution par un circuit non autorisé, le code logiciel exécute quand même une fonction par décodage des instructions C1 et C2 sans toutefois donner accès aux données protégées. En cas d'exécution sur une plateforme non sécurisée ou non autorisée, l'utilisateur ne s'aperçoit donc pas de l'absence d'accès aux données protégées dans la mesure où une fonction est bien exécutée par le programme.

Par exemple, lors de la conception du programme et plus particulièrement de sous-programmes manipulant des données à accès contrôlé, le programmeur détermine quelles sont les instructions sensibles qui, exécutées d'une autre façon, ne fourniront pas la fonctionnalité attendue mais ne bloqueront pas non plus le système. Il remplace alors, dans le code logiciel, chaque occurrence de ces instructions (par exemple S1 et S2) par des instructions sans risque (par exemple C1 et C2). Puis, il configure le système et notamment le module 20 (par exemple, il remplit le plan mémoire 25) pour que les instructions C1 et C2 soient respectivement redirigées vers les instructions S1 et S2.

Selon un autre exemple de réalisation, le code logiciel est modifié lors de sa compilation ou lors de son installation dans l'unité centrale par des systèmes de déchiffrement usuels de sorte qu'il implémente directement dans le code logiciel les instructions redirigées.

Selon un mode de réalisation préféré, les instructions redirigées par le module 20 sont figées en dur (en mémoire non volatile fixée à la fabrication) dans le circuit intégré. En variante, les codes opératoires redirigés par le module 20 sont programmables dans un mode de fonctionnement sécurisé du circuit.

Le module 20 peut également être utilisé pour activer ou désactiver une fonction particulière du circuit grâce à des instructions de début et de fin de portions de code destinées à une exécution contrôlée. Il peut s'agir, par exemple, de l'activation et désactivation d'un fonctionnement en mode sécurisé d'un circuit intégré. Il peut également s'agir selon un autre exemple d'une activation ou non d'un algorithme de chiffrement.

La figure 6 est un schéma-bloc partiel d'un autre mode de réalisation d'une unité de traitement 11 (CPU). Dans cet exemple, on a repris la mémoire morte 12, la mémoire non volatile reprogrammable 13 et la mémoire vive 14 de l'exemple de la figure 3 qui communiquent par l'intermédiaire des bus 15. Le cas échéant, certaines mémoires peuvent être externes au circuit intégrant l'unité de traitement. D'autres fonctions non représentées en figure 4 du circuit intégré peuvent bien entendu être présentes.

Comme toute unité de traitement de programme, une instruction, pour son exécution, est transférée dans des registres que contient l'unité 11. Chaque instruction comporte un opérateur et le plus souvent un ou plusieurs opérandes ou arguments (par exemple des adresses, des variables, etc.). Un registre d'instructions 112 (RI) est destiné à recevoir les opérateurs des instructions et un ou plusieurs registres 111 (R) sont destinés à recevoir les arguments (adresses) ou opérandes (valeurs) associés aux opérateurs. Le cas échéant, les codes opératoires (OpCodes) constituant les arguments ou opérandes proviennent d'une mémoire différente de celles contenant le code opératoire représentant l'opérateur. Le chargement des instructions depuis l'une quelconque des mémoires 12, 13 ou 14 est effectué sous commande d'un compteur programme 114 (Prog Counter) qui fournit une adresse ADD à un décodeur mémoire 116 (MEM DECOD) chargé de sélectionner celle des mémoires qui contient l'instruction réclamée par l'unité de traitement. Le décodeur 116 est soit intégré à l'unité de traitement 11, soit un élément distinct de cette unité. Il fournit des signaux S12, S13 et S14 aux mémoires respectives 12, 13 et 14. Ces signaux sont par exemple des signaux individuels à destination des différentes mémoires pour sélectionner la mémoire devant fournir l'instruction sur le bus 15. Selon un autre exemple non représenté, toutes les mémoires reçoivent le même signal dont le contenu diffère selon la mémoire adressée, les mémoires comportant alors des moyens d'interprétation de ce signal unique.

Les différents éléments de l'unité de traitement 11 sont synchronisés par un signal d'horloge CLK (pour simplifier, illustré uniquement comme étant fourni au compteur programme 114). Le registre d'instructions 112 reçoit un signal de chargement d'instruction LI (Load Instruction) fourni par un séquenceur ou machine d'état 113 (SM) de l'unité 11 lorsqu'une instruction est prête sur le bus 15 pour être chargée. Les codes opératoires de l'instruction sont répartis dans l'unité 11 entre le registre d'instructions 112 pour l'opérateur et les registres 111 pour les arguments ou opérandes. Le signal LI n'est fourni que pour les opérateurs des instructions et non pour leurs arguments ou opérandes.

Selon le mode de réalisation représenté en figure 6, l'opérateur d'une instruction provenant du bus 15 est chargé dans le registre d'instruction 112 après avoir traversé le module 20 de redirection éventuelle. Par conséquent, l'opérateur est soit chargé directement dans le registre 112 soit transformé en un autre opérateur contenu dans le module 20 et correspondant à l'instruction protégée. De préférence, le module 20 reçoit un signal d'activation (ACTIV) qui, lorsqu'il est dans un état inactif, ne provoque pas la conversion d'opérateurs. Le signal d'activation provient soit de l'unité de traitement elle-même, soit du décodeur mémoire en fonction des adresses envoyées par le compteur programme. Une telle variante permet par exemple de n'activer la fonction de redirection que lorsque le programme vient d'une mémoire déterminée (par exemple une mémoire vive ou la mémoire reprogrammable EEPROM).

Le déroulement du code lui-même détermine si les instructions lues dans les mémoires doivent être redirigées ou non de sorte que le mécanisme est transparent pour l'opérateur.

Selon un mode de réalisation, le module 20 est constitué d'une machine d'états finis contenant les codes des instructions à détecter et des instructions redirigées.

Un avantage est que n'importe quelle unité de traitement ou microprocesseur embarqué dans une plateforme sécurisée devient personnalisé pour un code logiciel donné sur un produit donné. La sécurité du code logiciel s'en trouve de ce fait accrue car seul le produit d'origine peut faire tourner les sous-programmes tels qu'ils ont été écrits, le même code logiciel transféré sur une autre plateforme matérielle ne fonctionnera pas de la même façon et ne remplira donc pas la même fonction.

Un autre avantage est que ce mécanisme est transparent pour l'utilisateur en particulier en veillant à utiliser des instructions en clair qui conduisent à l'exécution de fonctions ne faisant pas d'appel aux données à accès contrôlé.

De préférence, le choix de ces instructions sera tel que leur durée d'exécution est identique aux instructions secrètes afin de masquer un peu plus le fonctionnement.

Des modes de réalisation particuliers de la présente invention ont été décrits. Diverses variantes et modifications apparaîtront à l'homme de l'art. En particulier, la mise en oeuvre pratique de l'invention (notamment le choix des instructions à détecter) et son adaptation à un circuit donné est à la portée de l'homme du métier à partir des indications fonctionnelles données ci-dessus. En outre, bien que l'invention ait été décrite en relation avec un exemple dans lequel les programmes sont contenus dans des mémoires intégrées avec une unité de traitement, elle s'applique également au cas où les programmes sont contenus dans des mémoires externes. Enfin la redirection opérée par l'invention est compatible avec toute autre protection des programmes (par exemple, leur stockage chiffré).

## Revendications

1. Circuit électronique (10) contenant une unité de traitement (11) d'exécution d'instructions de programme, comportant au moins un module (20) de reconnaissance d'au moins un premier opérateur d'instruction dans le programme et de conversion de ce premier opérateur en un autre opérateur d'instruction, **caractérisé en ce que** les deux opérateurs sont interprétables par l'unité de traitement et **en ce qu'**un plan mémoire (25) contient, en guise d'adresse, le premier opérateur et en donnée correspondante, l'autre opérateur.

2. Circuit selon la revendication 1, dans lequel le module (20) est activable en fonction d'une mémoire d'où proviennent les instructions à traiter.

3. Procédé de contrôle d'accès à des données dans un circuit électronique (10) contenant une unité de traitement (11) d'exécution de programme, **caractérisé en ce que** :
des premiers opérateurs d'instruction contenus dans un programme à exécuter sont, lors de leur chargement pour exécution, comparés par rapport à au moins un deuxième opérateur ; et
en cas d'identité, le premier opérateur est remplacé par un troisième opérateur donnant accès auxdites données, le premier opérateur correspondant alors à une adresse d'un plan mémoire dont la donnée correspond au troisième opérateur.

4. Procédé selon la revendication 3, dans lequel chaque premier opérateur et son deuxième opérateur associé conduisent à un temps d'exécution identique.
